# EUROPEAN PATENT SPECIFICATION

(11) **EP 1 951 039 B1**
(45) Date of publication and mention of the grant of the patent: **25.02.2015**
(21) Application number: 06837538.5
(22) Date of filing: 14.11.2006
(51) Int. Cl.: A01N 25/30, A01N 57/20, A01P 13/00

(54) **AGRICULTURAL ADJUVANT COMPOSITIONS, PESTICIDE COMPOSITIONS, AND METHODS FOR USING SUCH COMPOSITIONS**
LANDWIRTSCHAFTLICHE HILFSSTOFFZUSAMMENSETZUNGEN, PESTIZIDZUSAMMENSETZUNGEN, UND VERFAHREN ZUR VERWENDUNG VON SOLCHEN ZUSAMMENSETZUNGEN
COMPOSITIONS D ADJUVANT AGRICOLE, COMPOSITIONS DE PESTICIDES ET PROCEDES D UTILISATION DE TELLES COMPOSITIONS

(30) Priority: 14.11.2005 US 736610 P
(43) Date of publication of application: 06.08.2008
(60) Divisional application: 13183172.9
(73) Proprietor: Solvay USA Inc., Cranbury, NJ 08512 (US)
(72) Inventor: PAZHIANUR, Rajesh, Belle Mead, NJ 08502 (US); MODARESSI, Hedieh, San Ramon, CA 94582 (US); SMITH, Francis George, Forked River, NJ 08731 (US)
(74) Representative: Gillard, Richard Edward
(86) International application number: PCT/US2006/044148
(87) International publication number: WO 2007/059107

(56) References cited:
- EP-A1- 0 068 352
- EP-A1- 0 511 611
- EP-A1- 1 661 976
- EP-A1- 1 707 240
- EP-A1- 1 726 295
- EP-A1- 1 875 891
- EP-A2- 1 541 023
- WO-A1-00/13656
- WO-A1-00/38523
- WO-A1-00/67571
- WO-A1-00/67573
- WO-A1-01/08482
- WO-A1-97/06230
- WO-A1-2005/034895
- WO-A1-2006/035983
- WO-A1-2006/069791
- WO-A2-03/063589
- WO-A2-2006/069794
- WO-A2-2006/124606
- DE-A1- 19 723 763
- DE-A1- 19 907 376
- DE-U1- 20 105 305
- FR-A1- 2 398 797
- US-A1- 2003 045 431
- US-A1- 2005 096 249
- US-A1- 2008 131 390
- US-B1- 6 451 731
- US-B2- 6 734 141
- DATABASE WPI Week 199838 Thomson Scientific, London, GB; AN 1998-440348 XP002614636, & JP 10 183176 A (KAWAKEN FINE CHEM CO LTD) 14 July 1998 (1998-07-14)

## Description

### Field of the Invention

This invention relates to agricultural herbicide compositions, and methods for using such compositions.

### Background of the Invention

Many agricultural pesticides, including insecticides, fungicides, herbicides, miticides, and plant growth regulators, are applied in the form of a liquid composition. In addition to the pesticide and a solvent, such liquid compositions typically include one or more adjuvant compounds intended to improve one or more properties of the liquid composition, such as for example, storage stability, ease of handling, pesticide efficacy against target organisms.

There is a continuing interest in pesticide compositions that exhibit improved properties.

WO 2006/069791 discloses herbicidal compositions comprising an aminophosphate or aminophosphonate salt and a betaine-based surfactant. WO 2006/069794 discloses herbicidal compositions comprising aminophosphate or aminophosphonate salts, a betaine surfactant and an amine oxide surfactant. WO 2006/035983 discloses a herbicide composition containing an amino acid-based herbicide and a compound having a branched structure. WO 03/063589 discloses an aqueous phytopathological formulation comprising a hydrosoluble salt of an aminophosphate or aminophosphonate type herbicide, a principal surfactant selected from alkylbetaines and alkylamidoalkylbetaines, and an additive. EP 0 511 611 discloses liquid herbicidal compositions containing glufosinate and an alkyl polyglycoside. WO 01/08482 discloses glyphosate solution concentrates prepared by blending amido alkyl amine oxides with ether carboxylates, amphoteric surfactants, chelants, solvents, hydrotropes and/or wetting agents. US 2003/0045431 discloses a herbicidal solution which contains a water soluble glyphosate salt and a surfactant comprising an amphoteric surfactant and ether carobxylate. FR 2 398 797 discloses a pourable aqueous surfactant composition consisting essentially of water and an active mixture comprising an amphoteric surfactant, and an anionic surfactant. WO 97/06230 discloses cleaning compositions comprising a cationic quaternary ammonium surfactant; an anionic carboxylated alcohol alkoxylate surfactant; a surfactant compatibilizing agent; and water. WO 00/67573 discloses an agricultural adjuvant comprising a lipophilic solvents, plant nutrients, and cationic emulsifiers. WO 00/67571 discloses an agrochemical composition comprising an organic acid, a lipophilic solvent, plant nutrients, and an oil soluble base. WO 00/38523 discloses a herbicidal solution comprising a water soluble glyphosate salt and a surfactant. JP 10183176 discloses a liquid cleanser comprising an amphoteric surfactant, a fatty acid diethanolamide type nonionic surfactant, and an anionic surfactant. WO 00/13656 discloses an antimicrobial composition comprising: (a) about 0.1 to about 8.0 percent by weight of 2,4,4'-trichloro-2'-hydroxydiphenyl ether; (b) about 0.1 to about 8.0 percent by weight of 4-chloro-3, 5-dimethyl phenol; and (c) about 0.025 to about 5.0 percent by weight of glutaraldehyde. EP 1 875 891 discloses a liquid cosmetic or dermatological cleaning agent comprising one or more alkanesulfonate and one or more betaine, where the weight ratio of the alkane sulfonate and betaine is 6:3-1:2, and the viscosity of the agent is 1000-30000 mPas. US 2008/131390 discloses a hair treatment product, especially shampoo, containing al) alkyl ether sulfate or a) alkyl sulfate or the mixture thereof, b) secondary alkane sulfonate, c 1) betaine or c 2) ether carboxylate or the mixture thereof, d) at least one non-ionic surfactant, and e) a cationic polymer from the group of homopolymers or copolymers of diallyl-dimethyl-ammonium chloride or the reaction products of cyanamides with aldehydes and ammonium salts, or cyanamides with aldehydes and monoamines, or monoamines and/or polyamines with epichlorohydrine, or polyamines with cyanamides and amidosulphuric acid. US 2005/096249 discloses concentrated aqueous solutions of a first amphoteric surfactant, especially of betaines or amine oxides, which comprise one or more further amphoteric cosurfactants which have a different structure from the first amphoteric surfactant, in amounts by weight of from 0.01 % to 10%, preferably from 0.1% to 5%, more preferably from 0.5% to 3%, based on the highly concentrated aqueous solution. EP 0 068 352 discloses a mixture of surfactants from alpha-olefin sulfonates and other surfactants. EP 1 726 295 discloses a cosmetic and conditioning detergent composition, comprising an anionic sulfate or sulfonate surface-active agent, an anionic carboxylic surface-active agent, amphoteric surface-active agent and an amino silicone comprising a sterically complexed group containing an amine functional group in an aqueous medium, where the weight ratio of anionic sulfate or sulfonate surface-active agent to anionic carboxylic surface-active agent is 2-25. EP 1 707 240 discloses a cosmetic detergent composition, comprising: an anionic surface-active (I) sulfate/sulfonate; an anionic carboxylic surface-active different from (I) e.g. alkyl carboxylic acid polyoxyalkylene ether with 6-24 carbon; amphoteric surface-active agent; and an ester of carboxylic acid insoluble in water e.g. esters of carboxylic acid with 3-30 carbon and alcohol of 1-30 carbon, where at least one of which is branched, in an aqueous medium. EP 1 661 976 discloses ether carboxylates and glycerine derivatives as foam-enhancing agent for surfactants. DE 199 07 376 discloses a body cleaning composition, useful particularly as tinting or dyeing shampoo. The composition contains quaternary ammonium di-amide. DE 197 23 763 discloses an aqueous hair shampoo containing (a) 5-40 wt.% anionic sulphate, sulphonate, carboxylate and/or alkyl phosphate surfactant (excluding 8-22C acylaminocarboxylic acids or their water-soluble salts); (b) 0.5-10 wt.% 8-22C acylaminocarboxylic acids or their water-soluble salts; (c) 1-20 wt.% alkylglycoside; and (d) 0.5-10 wt.% amphoteric and/or zwitterionic surfactants. WO 2005/034895 discloses a wash composition, in particular a shampoo and body wash composition, comprising: a surfactant; a microbiological control agent; a rheological additive; a conditioning agent; and a solubiliser. DE 201 05 305 discloses a toning shampoo comprising a mixture of an amphoteric and / or zwitterionic surfactant, a nonionic surfactant, and a direct-acting hair dye.

### Summary of the Invention

In a first aspect, the present invention is directed to a herbicide composition comprising,
(a) one or more betaine surfactant compounds, and
(b) one or more surfactant compounds selected from sulfonates, and alkoxylated fatty acids, and
(c) an effective amount of a herbicide.

In a second aspect, the present invention is directed to a method for treating a target plant, comprising applying the above described herbicide composition to such plant.

### Detailed Description of Invention and Preferred Embodiments

As used herein, the term "alkyl" means a saturated straight chain, branched chain, or cyclic hydrocarbon radical, such as for example, methyl, ethyl, n-propyl, iso-propyl, n-butyl, sec-butyl, t-butyl, pentyl, n-hexyl, and cyclohexyl.

As used herein, the term "alkoxy" means an oxy radical that is substituted with an alkyl group, such as for example, methoxy, ethoxy, propoxy, isopropoxy, and butoxy. As used herein in reference to an organic compound, the term "alkoxylated" means that the compound comprises one or more alkoxy or, more typically, poly(alkyleneoxy) moieties, such as, for example a poly(ethyleneoxy), poly(propyleneoxy), or poly(ethlyeneoxypropyleneoxy) moiety and the term "ethoxylated" means that the compound comprises at least one ethoxy or poly(ethyleneoxy) moiety. As used herein in reference to a poly(alkyleneoxy) moiety, the notation "(n)", wherein n is an integer, indicates the number of alkyleneoxy monomeric units in the poly(alkyleneoxy) moiety. For example such as " ethoxylated (15) tridecyl alcohol" means a tridecyl alcohol ethoxylated with 15 moles of ethyleneoxy units per mole of tridecyl alcohol.

As used herein, the term "alkenyl" means an unsaturated straight chain, branched chain, or cyclic hydrocarbon radical that contains one or more carbon-carbon double bonds, such as, for example, ethenyl, 1-propenyl, and 2-propenyl.

As used herein, the term "aryl" means a monovalent unsaturated hydrocarbon radical containing one or more six-membered carbon rings in which the unsaturation may be represented by three conjugated double bonds, which may be substituted one or more of carbons of the ring with hydroxy, alkyl, alkenyl, halo, haloalkyl, or amino, such as, for example, phenoxy, phenyl, methylphenyl, dimethylphenyl, trimethylphenyl, chlorophenyl, trichloromethylphenyl, aminophenyl, and tristyrylphenyl.

As used herein, the term "arylene" means a divalent unsaturated hydrocarbon radical containing one or more six-membered carbon rings in which the unsaturation may be represented by three conjugated double bonds, which may be substituted one or more of carbons of the ring with hydroxy, alkyl, alkenyl, halo, haloalkyl, or amino, such as, for example, phenylene, methylphenylene, trimethylphenylene, aminophenylene, and tristyrylphenylene.

As used herein, the term "aralkyl" means an alkyl group substituted with one or more aryl groups, such as, for example, phenylmethyl, phenylethyl, and triphenylmethyl.

As used herein, the term "aralkenyl" means an alkenyl group substituted with an aryl group, such as, for example, phenylethenyl, and phenylpropenyl.

As used herein, the term "aryloxy" means an oxygen radical substituted with an aryl group, such as, for example, phenoxy, methylphenoxy, and trimethylphenoxy.

As used herein, the terminology "(Cₙ-Cₘ)" in reference to an organic group, wherein n and m are each integers, indicates that the group may contain from n carbon atoms to m carbon atoms per group.

As used herein, the term "agronomically acceptable salts" refers to salts prepared from agronomically acceptable non-toxic bases or acids including inorganic or organic bases and inorganic or organic acids. Typical agronomically acceptable salts the compound referred to herein comprise an anion derived from the compound, for example, by deprotonation of a hydroxy or hydroxyalkyl substituent, and one or more positively charged counterions. Suitable positively charged counterions include inorganic cations and organic cations, such as for example, sodium cations, potassium cations, calcium cations, magnesium cations, isopropylamine cations, ammonium cations, and tetraalkylammonium cations.

Betaine surfactant compounds are generally known compounds. In one embodiment, the betaine surfactant compound comprises one or more compounds according to formula (I): 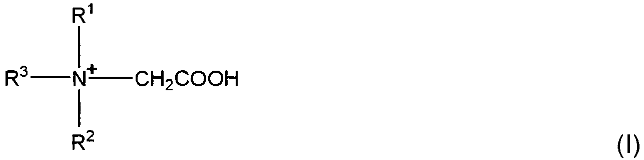 wherein:
R¹, R², and R³ are each independently alkyl, hydroxyalkyl, alkylamidoalkyl, or-CH₂COOH,
or an agronomically acceptable salt thereof.

In one embodiment, R¹ and R² are each independently (C₁-C₆)alkyl, more typically methyl, and R³ is (C₁-C₃₀)alkyl, more typically (C₈-C₁₈)alkyl.

In one embodiment, R¹ and R² are each independently (C₁-C₆)alkyl, more typically methyl, and R³ is alkylamidoalkyl, more typically (C₁-C₃₀)alkylamido(C₁-C₆)alkyl.

Suitable betaines include, for example, decyl dimethyl betaine, lauryl dimethyl betaine, coco dimethyl betaine, stearyl dimethyl betaine, cocoamidopropyl betaine, and mixtures thereof.

Sulfonate surfactant compounds are generally known compounds and include agronomically acceptable salts of mono-sulfonic acids, agronomically acceptable salts of di-sulfonic acids, and mixtures thereof. In one embodiment, the adjuvant composition comprises one or more sulfonate surfactant compounds according to formula (III) or (IV): 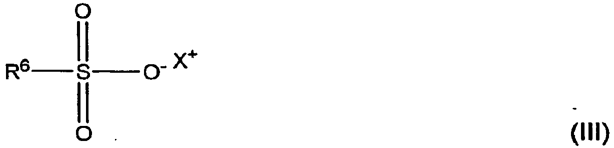 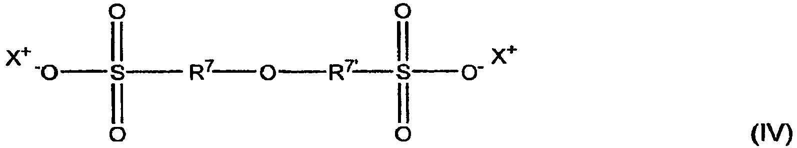 wherein:
R⁶ is aryl, aryloxy, or alkenyl,
R⁷ and R⁷ are each independently arylene, and
X⁺ is an agronomically acceptable cation.

In one embodiment, R⁶ is phenyl, (C₈-C₁₈)alkylphenyl, or (C₈-C₁₈)alkylphenoxy.

In one embodiment, R⁷ and R^{7'} are each (C₈-C₁₈)alkylphenylene.

Suitable sulfonate surfactant compounds include, for example, calcium dodecylbenzene sulfonate, calcium octadecylphenyl sulfonate, sodium tridecyl benzene sulfonate, isopropylamine dodecyl benzene sulfonate, isopropylamine tridecyl benzene sulfonate, ammonium tridecyl phenyl sulfonate, sodium (C₈-C₁₈)alkylphenoxysulfonate, sodium xylene sulfonate,sodium (C₁₄-C₁₆)alpha olefin sulfonate, disodium alkyldiphenyloxide disulfonates such as, for example, DOWFAX 2A1 (Dow Chemical Company), and mixtures thereof.

In one embodiment, the adjuvant composition comprises one or more alkoxylated fatty acid surfactant compounds. The fatty acid portion of such alkoxylated fatty acid surfactant compounds is derived from a saturated or unsaturated mono- or di- fatty acids, typically (C₆-C₃₀)fatty acids, such as, for example, lauric acid, myristic acid, palmitic acid, stearic acid, oleic acid, linoleic acid, behenic acid, erucic acid, or a mixture thereof, including vegetable oils, such as, for example, tall oil, rapeseed oil, canola oil, soy oil, coconut oil, castor oil, corn oil, olive oil, sunflower oil, cottonseed oil, palm oil, peanut oil, sesame oil, safflower oil, linseed oil, flax seed oil, palm kernel oil, and mixtures thereof. These acids are alkoxylated with from 2 to 20 moles, more typically from 5 to 20 moles of a (C₂-C₄)alkylene oxide, more typically, ethylene oxide.

The herbicide composition comprises a non-zero amount of the one or more betaine surfactant compounds and a non-zero amount of one or more surfactant compounds selected from sulfonates, and alkoxylated fatty acids. As used herein, "non-zero amount" means an amount greater than 0.

In one embodiment, the herbicide composition comprises, based on 100 parts by weight ("pbw") of the herbicide composition:
(a) greater or equal to than 0.1 pbw, more typically from 1 pbw to 99 pbw, even more typically from 1 pbw to 50 pbw, and still more typically from 5 pbw to 25 pbw, of one or more betaine surfactant compounds, and
(b) greater or equal to than 0.1 pbw, more typically from 0.001 pbw to 0.1 pbw, even more typically from 0.005 pbw to 0.095 pbw, and still more typically from 0.02 pbw to 0.08 pbw, of one or more surfactant compounds selected from sulfonates and alkoxylated fatty acids.

In one embodiment of the herbicide composition, the one or more surfactants comprise at least one sulfonate surfactant and may optionally further comprise one or more surfactants selected from alkyl ether sulfates, sulfosuccinates, alkyl ether carboxylates, alkoxylated fatty acids, and alkoxylated alcohols.

In one embodiment of the herbicide composition, the one or more surfactants comprise at least one alkoxylated fatty acid surfactant and may optionally further comprise one or more surfactants selected from alkyl ether sulfates, sulfonates, sulfosuccinates, alkyl ether carboxylates, and alkoxylated alcohols

In one embodiment, the herbicide composition comprises, per 1 pbw betaine component of such adjuvant composition, from 0.1 to 10, more typically from 1 to 8, and even more typically from 2 to 5 pbw, of one or more surfactant compounds selected from sulfonates, and alkoxylated fatty acids.

Suitable herbicides include, for example, triazine herbicides such as metribuzin, hexaxinone, or atrazine; sulfonylurea herbicides such as chlorsulfuron; uracils such as lenacil, bromacil, or terbacil; urea herbicides such as linuron, diuron, siduron, or neburon; acetanilide herbicides such as alachlor, or metolachlor; thiocarbamate herbicides such as benthiocarb, triallate; oxadiazolone herbicides such as oxadiazon; phenoxyacetic acids such as 2,4-D; diphenyl ether herbicides such as fluazifop, acifluorfen, bifenox, or oxyfluorfen; dinitro aniline herbicides such as trifluralin; organophosphonate herbicides such as glyphosate salts and esters; dihalobenzonitrile herbicides such as bromoxynil, or ioxynil, dipyridilium herbicides such as paraquat.

Pesticide compounds are, in general, referred herein to by the names assigned by the International Organization for Standardization (ISO). ISO common names may be cross-referenced to International Union of Pure and Applied Chemistry ("IUPAC") and Chemical Abstracts Service ("CAS") names through a number of sources such as, for example, the Compendium of Pesticide Common Names, which is available on-line at http://www.hclrss.demon.co.uk/index.html.

In one embodiment, the herbicide comprises one or more compounds selected from the group consisting of glufosinate, glyphosate, water soluble glufosinate salts, water soluble glyphosate salts, and mixtures thereof, including, for example sodium, potassium, isopropyl amine, and ammonium salts.

In one embodiment, the pesticide comprises one or more compounds selected from the group consisting of the potassium salt of glyphosate, the sodium salt of glyphosate, the isopropyl amine salt of glyphosate, the ammonium salt of glyphosate.

Herbicidal compositions containing glyphosate or derivatives thereof are used to control a very wide variety of plants worldwide and can, when applied to the target plant in a herbicidally effective amount, reportedly control one or more target plant species of one or more of the following genera: Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium and Zea, including annual broadleaf species such as, for example, velvetleaf (*Abutilon theophrasti*), pigweed (*Amaranthus* spp.), buttonweed (*Borreria* spp.), oilseed rape, canola, indian mustard, etc. *(Brassica* spp.), commelina *(Commelina* spp.), filaree *(Erodium* spp.), sunflower *(Helianthus* spp.), morningglory (*Ipomoea* spp.), kochia (*Kochia scoparia*)*,* mallow *(Malva* spp.), wild buckwheat, smartweed, etc. *(Polygonum* spp.), purslane (*Portulaca* spp.), russian thistle *(Salsola* spp.), sida *(Sida* spp.), wild mustard *(Sinapis arvensis*) and cocklebur *(Xanthium* spp.), annual narrowleaf species such as for example, wild oat *(Avena fatua*)*,* carpetgrass (*Axonopus* spp.), downy brome (*Bromus tectorum*)*,* crabgrass *(Digitaria* spp.), barnyardgrass (*Echinochloa crus-galli*), goosegrass *(Eleusine indica),* annual ryegrass (*Lolium multiflorum*)*,* rice (*Oryza sativa*), ottochloa (*Ottochloa nodosa*), bahiagrass (*Paspalum notatum*)*,* canarygrass (*Phalaris* spp.), foxtail *(Setaria* spp.), wheat (Triticum aestivum) and corn (Zea mays), perennial broadleaf species such as, for example, mugwort (Artemisia spp.), milkweed (Asclepias spp.), canada thistle (Cirsium arvense), field bindweed (Convolvulus arvensis) and kudzu (Pueraria spp.), perennial narrowleaf species such as for example, brachiaria (Brachiaria spp.), bermudagrass (Cynodon dactylon), yellow nutsedge (Cyperus esculentus), purple nutsedge (C. rotundus), quackgrass (Elymus repens), lalang (Imperata cylindrica), perennial ryegrass (Lolium perenne), guineagrass (Panicum maximum), dallisgrass (Paspalum dilatatum), reed (Phragmites spp.), johnsongrass (Sorghum halepense) and cattail (Typha spp.), and other perennial species such as, for example, horsetail (Equisetum spp.), bracken (Pteridium aquilinum), blackberry (Rubus spp.), and gorse (Ulex europaeus).

As used herein, the terminology "effective amount" in reference to the relative amount of the herbicide in the composition means the relative amount of herbicide that is effective to control the growth of a target plant, when the pesticide composition is applied to the plant at a given application rate.

In one embodiment, the herbicide is glyphosate herbicide and the composition comprises a herbicidally effective amount of glyphosate.

As used herein, the terminology "an herbicidally effective amount" in reference to the relative amount of herbicide in an herbicidal composition means the relative amount that is effective to control growth of a target plant when the herbicidal composition is spray applied to the target plant at a given application rate.

The adjuvant composition comprises a non-zero amount of the one or more betaine surfactant compounds and a non-zero amount of one or more surfactant compounds selected from sulfonates, and alkoxylated fatty acids.

In one embodiment, the herbicide composition comprises, based on 100 pbw of the adjuvant composition:
(a) greater than or equal to 0.001 part by weight, more typically from 0.001 pbw to to 0.1 pbw, even more typically from 0.001 pbw to 0.05 pbw, and still more typically from 0.005 pbw to 0.025 pbw, of one or more betaine surfactant compounds,
(b) greater than or equal to 0.001 part by weight, more typically from 0.001 pbw to 0.1 pbw, even more typically from 0.005 pbw to 0.095 pbw, and still more typically from 0.02 pbw to 0.08 pbw, of one or more surfactant compounds selected from sulfonates, and alkoxylated fatty acids, and
(c) an effective amount of a herbicide.

In one embodiment of the adjuvant composition, the one or more surfactants comprise at least one sulfonate surfactant and may optionally further comprise one or more surfactants selected from alkyl ether sulfates, sulfosuccinates, alkyl ether carboxylates, alkoxylated fatty acids, and alkoxylated alcohols.

In one embodiment of the herbicidecomposition, the one or more surfactants comprise at least one alkoxylated fatty acid surfactant and may optionally further comprise one or more surfactants selected from alkyl ether sulfates, sulfonates, sulfosuccinates, alkyl ether carboxylates, and alkoxylated alcohols

In one embodiment, the herbicidecomposition comprises, based on 100 pbw of the composition, from 10 pbw to 90 pbw, more typically from 30 to 60 pbw, glyphosate.

The herbicidecompositions of the present invention may each, optionally, further comprise one or more agronomically acceptable solvent. Suitable solvents include, for example, water, and organic solvents, such as for example, alkylated aromatic solvents, such as toluene or alkylated naphthalenes and mineral oil fractions, such as paraffinic hydrocarbons.

In one embodiment, the herbicidecomposition of the present invention is an aqueous composition and thus comprises water.

In one embodiment, the herbicidecomposition of the present invention further comprises, based on 100 pbw of such composition, up to 25 pbw an organic solvent.

In one embodiment, the herbicidecomposition further comprises a fertilizer. Such fertilizers can provide the primary nutrients of nitrogen, phosphorus and/or potassium such as urea ammonium nitrate (30-0-0), 10-34-0, secondary nutrients sulfur, calcium, magnesium such as ammonium thiosulfate 12-0-0-26S, micronutrient fertilizers containing zinc, iron, molybdenum, copper, boron, chlorine, magnesium, for example 0-0-1 3%-S; 3%-Zn; 2%-Fe; 2%-Mn and mixtures thereof. In one embodiment, the pesticide composition comprises from 85 to 99 pbw, more typically from 90 to 99 pbw, and even more typically from 93 to 99 pbw, of a mixture of fertilizer and water.

In one embodiment, the herbicidecomposition of the present invention further comprises one or more water conditioners, such as for example, chelating agents, such as ethylenediamine tetraacetic acid, complexing agents such as ammonium sulfate, and pH adjusting agents, such as citric acid and polyacrylic acid.

In one embodiment, the herbicidecomposition of the present invention comprises, based on 100 pbw of such composition, from 0.1 to 3 pbw, more typically from 0.7 to 2.5 pbw, of one or more water conditioners, typically ammonium sulfate.

The herbicidecomposition of the present invention may, optionally, further comprise other ingredients, such as one or more additional surfactants, one or more thickeners, such as polysaccharide thickeners, and polyacrylamide thickeners, as well as antifoams, spreaders, and drift control agents.

The herbicidecomposition of the present invention is made by combining and mixing the components of such composition.

The herbicidecomposition of the present invention is made by mixing the ingredients together. In one embodiment, the pesticide composition is made by combining and mixing the adjuvant composition of the present invention, a herbicidecompound, and water. Alternatively, the herbicidecomposition is made by combining and mixing the separate components of the adjuvant composition, a herbicide, and water.

In one embodiment, the herbicidecomposition is spray applied to foliage of a target plant at a rate of from 58.5 L/km² (0.5 pint/acre) to 350 L/km² (3 pints/acre), more typically from 58.5 L/km² (0.5 pint/acre) to 292.3 L/km² (2.5 pints/acre).

### EXAMPLES 2-4 AND 10 AND COMPARATIVE EXAMPLES 1, 5-9 AND C1-C4

The herbicidecompositions of Examples 2-4 and 10 and Comparative Examples 1, 5-9 and C1-C4 were aqueous solutions made by combining the ingredients in the relative amounts (based on 100 pbw of the respective pesticide composition) set forth below and mixing

| **EX #** | **Ingredients (pbw/ 100 pbw pesticide composition)** |
|---|---|
| 1 | 1.5 pbw 30% aqueous solution of (C₁₂-C₁₄)alkyl dimethyl betaine |
| | 3.5 pbw 30% aqueous solution of sodium lauryl ether sulfate, ethoxylated with 1-3 moles ethylene oxide per mole) |
| | 38 pbw glyphosate isopropyl amine salt (MON0139, Monsanto) |
| | 57 pbw water |
| 2 | 2.25 pbw 30% aqueous solution of (C₁₂-C₁₄)alkyl dimethyl betaine |
| | 2.5 pbw tall oil fatty acid ethoxylated with 10 moles of ethylene oxide per mole |
| | 38 pbw glyphosate isopropyl amine salt (MON0139, Monsanto) |
| | 57.25 pbw water |
| 3 | 1.5 pbw 30% aqueous solution of (C₁₂-C₁₄)alkyl dimethyl betaine |
| | 4.95 pbw tall oil fatty acid ethoxylated with 10 moles of ethylene oxide per mole |
| | 38 pbw glyphosate isopropyl amine salt (MON0139, Monsanto) |
| | 55.55 pbw water |
| 4 | 1.5 pbw 30% aqueous solution of (C₁₂-C₁₄)alkyl dimethyl betaine |
| | 2.5 pbw tall oil fatty acid ethoxylated with 10 moles of ethylene oxide per mole |
| | 1.12 pbw 45% aqueous solution of sodium alkylphenoxy benzene sulfonate |
| | 38 pbw glyphosate isopropyl amine salt (MON0139, Monsanto) |
| | 56.88 pbw water |
| 5 | 1.5 pbw 30% aqueous solution of (C₁₂-C₁₄)alkyl dimethyl betaine |
| | 2.8 pbw 56% aqueous solution of ammonium (C₈-C₁₀)alkyl ether sulfate, ethoxylated with 3 moles ethylene oxide per mole |
| | 38 pbw glyphosate isopropyl amine salt (MON0139, Monsanto) |
| | 57.7 pbw water |
| 6 | 1.5 pbw 30% aqueous solution of (C₁₂-C₁₄)alkyl dimethyl betaine |
| | 4 pbw sodium dioctyl sulfosuccinate |
| | 38 pbw glyphosate isopropyl amine salt (MON0139, Monsanto) |
| | 56.5 pbw water |
| 7 | 1.5 pbw 30% aqueous solution of (C₁₂-C₁₄)alkyl dimethyl betaine |
| | 3.75 pbw sodium laureth-13 carboxylate |
| | 38 pbw glyphosate isopropyl amine salt (MON0139, Monsanto) |
| | 56.75 pbw water |
| 8 | 1.5 pbw 30% aqueous solution of (C₁₂-C₁₄)alkyl dimethyl betaine |
| | 2 pbw disodium laurimide (MEA) sulfosuccinate |
| | 38 pbw glyphosate isopropyl amine salt (MON0139, Monsanto) |
| | 58.5 pbw water |
| 9 | 1.5 pbw 30% aqueous solution of (C₁₂-C₁₄)alkyl dimethyl betaine |
| | 5 pbw ethoxylated (20 moles ethylene oxide per mole) oleyl alcohol |
| | 38 pbw glyphosate isopropyl amine salt (MON0139, Monsanto) |
| | 55.5 pbw water |
| 10 | 1.5 pbw 30% aqueous solution of (C₁₂-C₁₄)alkyl dimethyl betaine |
| | 2 pbw ammonium xylene sulfonate |
| | 38 pbw glyphosate isopropyl amine salt (MON0139, Monsanto) |
| | 58.5 pbw water |
| C1 | 38 pbw glyphosate isopropyl amine salt (MON0139, Monsanto) |
| | 62 pbw water |
| C2 | 3 pbw 30% aqueous solution of (C₁₂-C₁₄)alkyl dimethyl betaine |
| | 38 pbw glyphosate isopropyl amine salt (MON0139, Monsanto) |
| | 59 pbw water |
| C3 | 1.5 pbw 30% aqueous solution of (C₁₂-C₁₄)alkyl dimethyl betaine |
| | 38 pbw glyphosate isopropyl amine salt (MON0139, Monsanto) |
| | 60.5 pbw water |
| C4 | Roundup^{®} Ultramax |

The efficacy of the compositions in controlling plant growth was tested by applying the compositions to the following plant species: Green Foxtail ("GRF"), Giant Foxtail ("GF"), Shattercane ("SC"), Barnyard Grass ("BG"), Redroot Pigweed ("PW"), Common Waterhemp ("WH"), Common Purslane ("CP"), Kochia ("KO"), Velvetleaf ("VL"), Common Lambsquarter ("LQ"), Ivy Morning Glory ("MG"), at a rate of 58.5 L/km² (0.5 pint per acre) and at a rate of 116.9 L/km² (1.0 pint per acre). Results for the 58.5 L/km² (0.5 pint per acre) application rate at 28 days post application are given in TABLE I below as percent control of plant growth for various plant species. Results for the 116.9 L/km² (1.0 pint per acre) application rate are given below in TABLE II as percent control of plant growth for various plant species.

**TABLE I - 28 Days, 58.5 L/km² (0.5 pint/acre)**

| **Example #** | **% Control of Plant Growth** | | | | | | | | | | |
|---|---|---|---|---|---|---|---|---|---|---|---|
| | **GRF** | **GF** | **SC** | **BG** | **PW** | **WH** | **CP** | **KO** | **VL** | **LQ** | **MG** |
| 1 | 100 | 100 | 84 | 77 | 100 | 100 | 100 | 91 | 78 | 85 | 91 |
| 2 | 100 | 100 | 91 | 83 | 100 | 100 | 73 | 72 | 68 | 88 | 91 |
| 3 | 100 | 100 | 73 | 63 | 100 | 100 | 95 | 73 | 73 | 73 | 78 |
| 4 | 100 | 100 | 79 | 62 | 100 | 100 | 88 | 71 | 42 | 78 | 91 |
| 5 | 100 | 98 | 58 | 63 | 100 | 100 | 73 | 58 | 78 | 63 | 88 |
| 6 | 100 | 99 | 58 | 68 | 100 | 100 | 78 | 63 | 30 | 58 | 86 |
| 7 | 100 | 100 | 88 | 86 | 100 | 100 | 68 | 73 | 62 | 90 | 78 |
| 8 | 100 | 100 | 73 | 72 | 100 | 100 | 78 | 58 | 28 | 73 | 81 |
| 9 | 100 | 100 | 91 | 92 | 100 | 100 | 83 | 73 | 83 | 87 | 83 |
| 10 | 100 | 100 | 81 | 74 | 100 | 100 | 83 | 63 | 73 | 81 | 71 |
| C1 | 100 | 97 | 38 | 38 | 100 | 100 | 22 | 48 | 22 | 18 | 62 |
| C2 | 100 | 100 | 78 | 73 | 100 | 100 | 73 | 73 | 48 | 82 | 63 |
| C3 | 100 | 100 | 73 | 68 | 100 | 100 | 58 | 82 | 63 | 73 | 80 |
| C4 | 100 | 100 | 73 | 82 | 100 | 100 | 78 | 92 | 72 | 85 | 48 |

**TABLE II - 28 Days116.9 L/km² (1.0 pint per acre)**

| **Example #** | % **Control of Plant Growth** | | | | | | | | | | |
|---|---|---|---|---|---|---|---|---|---|---|---|
| | **GRF** | **GF** | **SC** | **BG** | **PW** | **WH** | **CP** | **KO** | **VL** | **LQ** | **MG** |
| 1 | 100 | 100 | 99 | 100 | 100 | 100 | 100 | 100 | 100 | 97 | 93 |
| 2 | 100 | 100 | 100 | 100 | 100 | 100 | 94 | 100 | 85 | 100 | 90 |
| 3 | 100 | 100 | 95 | 88 | 100 | 100 | 100 | 94 | 89 | 94 | 86 |
| 4 | 100 | 100 | 94 | 78 | 100 | 100 | 100 | 90 | 91 | 94 | 96 |
| 5 | 100 | 100 | 68 | 68 | 100 | 100 | 100 | 83 | 94 | 72 | 88 |
| 6 | 100 | 100 | 84 | 78 | 100 | 100 | 96 | 83 | 83 | 83 | 92 |
| 7 | 100 | 100 | 94 | 88 | 100 | 100 | 96 | 94 | 83 | 91 | 94 |
| 8 | 100 | 100 | 88 | 88 | 100 | 100 | 100 | 94 | 82 | 92 | 91 |
| 9 | 100 | 100 | 100 | 100 | 100 | 100 | 100 | 93 | 93 | 100 | 88 |
| 10 | 100 | 100 | 100 | 100 | 100 | 100 | 100 | 100 | 93 | 100 | 73 |
| C1 | 100 | 98 | 48 | 48 | 100 | 100 | 72 | 78 | 70 | 12 | 75 |
| C2 | 100 | 100 | 88 | 91 | 100 | 100 | 85 | 98 | 73 | 91 | 78 |
| C3 | 100 | 100 | 86 | 88 | 100 | 100 | 100 | 88 | 98 | 85 | 78 |
| C4 | 100 | 100 | 86 | 91 | 100 | 100 | 94 | 100 | 88 | 94 | 71 |

## Claims

1. A herbicide composition, comprising:
(a) one or more betaine surfactant compounds,
(b) one or more surfactant compounds selected from sulfonates, and alkoxylated fatty acids and
(c) an effective amount of a herbicide.

2. The composition of claim 1, wherein the composition comprises, based on 100 parts by weight of the composition, greater than or equal to 0.001 part by weight of the one or more betaine surfactant compounds and greater than or equal to 0.001 part by weight of the one or more surfactant compounds selected from sulfonates, and alkoxylated fatty acids.

3. The composition of claim 1 or 2, wherein the herbicide compound comprises one or more compounds selected from glufosinate, glyphosate, water soluble glufosinate salts, and water soluble glyphosate salts.

4. The composition of claim 3, wherein the herbicide compound comprises one or more compounds selected from the potassium salt of glyphosate, the sodium salt of glyphosate, the isopropyl amine salt of glyphosate, and the ammonium salt of glyphosate.

5. The composition of claim 1, wherein composition comprises, per 1 part by weight betaine component of such composition, from 0.1 to 10 part by weight of the one or more surfactant compounds selected from sulfonates, and alkoxylated fatty acids.

6. A method for treating a target organism to control the growth of the organism, comprising applying to the organism a herbicide composition according to any one of claims 1 to 5.

## Patentansprüche

1. Herbizidzusammensetzung, umfassend:
(a) eine oder mehrere Betain-Tensidverbindungen;
(b) eine oder mehrere Tensidverbindungen, die ausgewählt sind aus Sulfonaten und alkoxylierten Fettsäuren; und
(c) eine wirksame Menge eines Herbizids.

2. Zusammensetzung nach Anspruch 1, wobei die Zusammensetzung auf der Basis von 100 Gewichtsanteilen der Zusammensetzung mindestens 0,001 Gewichtsanteile der einen oder mehreren Betain-Tensidzusammensetzungen und mindestens 0,001 Gewichtsanteile der einen oder mehreren Tensidverbindungen, die ausgewählt sind aus Sulfonaten und alkoxylierten Fettsäuren, umfasst.

3. Zusammensetzung nach Anspruch 1 oder 2, wobei die Herbizidverbindung eine oder mehrere Verbindungen umfasst, die ausgewählt sind aus Glufosinat, Glyphosat, wasserlöslichen Glufosinatsalzen und wasserlöslichen Glyphosatsalzen.

4. Zusammensetzung nach Anspruch 3, wobei die Herbizidverbindung eine oder mehrere Verbindungen umfasst, die ausgewählt sind aus dem Kaliumsalz von Glyphosat, dem Natriumsalz von Glyphosat, dem Isopropylaminsalz von Glyphosat und dem Ammoniumsalz von Glyphosat.

5. Zusammensetzung nach Anspruch 1, wobei die Zusammensetzung je einem Gewichtsanteil des Betainbestandteils der Zusammensetzung 0,1 bis 10 Gewichtsanteile der einen oder mehreren Tensidverbindungen umfasst, die ausgewählt sind aus Sulfonaten und alkolyxierten Fettsäuren.

6. Verfahren zur Behandlung eines Zielorganismus zur Kontrolle des Wachstums des Organismus, umfassend das Zuführen einer Herbizidzusammensetzung nach einem der Ansprüche 1 bis 5 an den Organismus.

## Revendications

1. Composition herbicide, comprenant :
(a) un ou plusieurs composés tensioactifs de bétaïne,
(b) un ou plusieurs composés tensioactifs choisis parmi les sulfonates et les acides gras alcoxylés, et
(c) une quantité efficace d'un herbicide.

2. Composition selon la revendication 1, dans laquelle la composition comprend, pour 100 parties en poids de la composition, une quantité supérieure ou égale à 0,001 partie en poids du ou des composés tensioactifs de bétaïne et une quantité supérieure ou égale à 0,001 partie en poids du ou des composés tensioactifs choisis parmi les sulfonates et les acides gras alcoxylés.

3. Composition selon la revendication 1 ou 2, dans laquelle le composé herbicide comprend un ou plusieurs composés choisis parmi le glufosinate, le glyphosate, les sels de glufosinate solubles dans l'eau et les sels de glyphosate solubles dans l'eau.

4. Composition selon la revendication 3, dans laquelle le composé herbicide comprend un ou plusieurs composés choisis parmi le sel de potassium de glyphosate, le sel de sodium de glyphosate, le sel d'isopropylamine de glyphosate et le sel d'ammonium de glyphosate.

5. Composition selon la revendication 1, dans laquelle la composition comprend, pour 1 partie en poids du composant bétaïne d'une telle composition, de 0,1 à 10 parties en poids du ou des composés tensioactifs choisis parmi les sulfonates et les acides gras alcoxylés.

6. Procédé de traitement d'un organisme cible pour limiter la croissance de l'organisme, comprenant l'application sur l'organisme d'une composition herbicide selon l'une quelconque des revendications 1 à 5.
